# EUROPEAN PATENT APPLICATION

(11) **EP 4 751 561 A1**
(43) Date of publication of application: **03.06.2026**
(21) Application number: 25209789.4
(22) Date of filing: 20.10.2025
(51) Int. Cl.: A01K 1/04, A01K 27/00, B68B 5/00, B68B 1/13

(54) **TETHERING LEAD FOR ANIMALS**

(30) Priority: 29.11.2024 ES 202432233 U
(71) Applicant: Con Cuero Artesanos 1994 S.L., 29680 Estepona Málaga (ES)
(72) Inventor: The designation of the inventor has not yet been filed
(74) Representative: Sánchez Paulino, Francisco Javier

(57) **Abstract**

Tethering lead for animals, which allows the animal to be released when excessive force is applied, that comprises a first body (1), whose ends (2) are joined and include separable joining means (3), while the remainder of the body (1) forms a loop (4) configured as an eyelet serving as a fixing element, through which the other components of harnesses or handles are attached; and a second body (5), configured as a strap, whose ends (6) include separable joining means (3) complementary to those located on the first body (1).

## Description

### PURPOSE OF THE INVENTION

The purpose of this invention, as indicated in the title, is a tethering lead for animals, which allows the animal to be released when excessive force is applied. This innovation offers previously unknown advantages over existing technologies.

This invention is characterised by the specific functional and structural features of its components, all of which contribute to achieving a tethering lead that incorporates a system enabling the animal to be released if excessive force is applied to it.

### TECHNICAL FIELD

Therefore, this invention falls within the field of equipment for horses and pets, providing innovative solutions aimed at improving both the welfare of the animals and the comfort and efficiency for their carers.

### BACKGROUND OF THE INVENTION

Proper handling of horses and other animals in stables and stalls is a crucial aspect in ensuring their welfare and safety. However, a common practice that may pose serious risks is tying these animals to fixed elements such as bars or rings. This may seem like a simple solution for keeping the animal still and secure during certain activities, such as grooming or preparation for riding. However, this practice carries several inherent risks, mainly due to the nature of herbivores as prey animals.

Horses, for example, have a strong flight instinct that is triggered by unexpected stimuli, such as loud noises or sudden movements. In such situations, the horse may panic and pull back forcefully in an attempt to break free. This behaviour can lead to the breaking of the components intended to hold the horse in place and may result in dangerous situations. A horse that suddenly breaks free may injure itself by falling or colliding with nearby objects.

A violent attempt to break free can cause a range of injuries to the horse. Among the most common are muscular damage, resulting from the excessive effort made by the animal. In addition, there is the possibility of severe fractures if the horse strikes against hard objects during its escape attempt. In extreme cases, if the horse breaks its neck when suddenly freeing itself, the outcome may be fatal.

Users may also suffer serious injuries, including the loss of fingers, if they become entangled with the lead rope when the animal pulls with force.

It is important for users to be aware of the risks associated with the use of lead ropes, as they may face serious injuries if appropriate precautions are not taken. In situations where the animal pulls forcefully, there is a risk that the rope may become twisted or caught, which could result in significant injuries to the hands, including deep cuts, friction burns and, in extreme cases, the loss of fingers.

With reference to the current state of the art, it should be noted that, although various lead designs already exist, there is no known system presenting technical, structural, or constitutive features identical or similar to those claimed in this invention.

### EXPLANATION OF THE INVENTION

The purpose of the invention is a tethering lead for animals which incorporates an automatic release system in response to unusual forces. This feature is particularly useful in emergency situations, where an unexpected stimulus could startle the animal. This design not only prioritises the animal's safety, by preventing possible injuries or panic situations, but also ensures the user's comfort and peace of mind, by providing a solution that combines efficiency and ease of use.

Specifically, what this invention proposes, as previously indicated, is a tethering lead for animals composed of two elongated bodies, which are connected at their ends by separable joining means. The elongated bodies of the lead are manufactured from durable materials, capable of withstanding tension and everyday wear. These materials may range from reinforced nylon to high-quality leather, depending on the specific needs of the user and the type of animal for which the lead is intended.

One of the most innovative features of this design is its ability to allow a quick and safe release of the animal in unforeseen situations. When a horse, for example, is tied to hitching posts or to other fixed elements commonly found in stables, such as bars and rings, there is always the risk that an unexpected stimulus may frighten it. In such circumstances, it is common for the horse to attempt to escape by pulling back forcefully, which can be dangerous both for the animal and for the infrastructure.

The separable joining system is designed specifically to address this problem. If the horse or animal exerts a force greater than that considered normal, the tethering lead is automatically released. This mechanism prevents breakage of the lead rope or the headcollar, which are the components directly involved in restraining the animal. By avoiding such breakages, the risk of serious injury to the animal is minimised, injuries that could range from muscular damage to severe fractures, or even death in cases where the horse breaks its neck when freeing itself abruptly.

The joining means used are commonly known as hook-and-loop, a system that provides a secure yet easily detachable connection. This type of fastener is widely recognised for its effectiveness and durability, making it the preferred choice for addressing this situation.

The hook-and-loop mechanism consists of two straps: one with small hooks and the other with soft loops. When both straps are pressed together, the hooks catch onto the loops, creating a secure connection. However, what truly distinguishes this system is its ability to withstand tangential forces, allowing the joint to remain intact even under lateral pressure. This feature is particularly advantageous in applications where it is necessary to maintain fastening against tangential forces, as in this case.

One of the most notable advantages of this device is its ability to regulate the holding force according to the specific needs of the user. This is especially useful in the context of animal handling, where the size, temperament, and circumstances of the animal may vary significantly. Carers can adjust the closure tension to ensure both the animal's safety and its comfort, adapting to each situation as it arises.

In addition, the hook-and-loop system allows for rapid release or easy adjustment of the lead. This functionality is invaluable in situations requiring an immediate response, such as outdoor activities or training sessions. The ability to adjust the lead quickly not only enhances the user experience but also contributes to the animal's welfare by preventing sudden tugs or uncomfortable adjustments that could cause stress or injury.

Users have the ability to detach one end of the lead, allowing them to secure it both to the animal's restraints and to the hitching post. Once this step is completed, they can re-secure the ends of the tethering lead, thereby forming a firm section between the animal and the hitching post. At the same time, the system allows this section to release when the animal exerts a predetermined force.

Unless otherwise stated, all technical and scientific terms used in this specification have the meanings commonly understood by a person skilled in the relevant art. In implementing this invention, procedures and materials similar or equivalent to those described herein may be used.

### BRIEF DESCRIPTION OF THE DRAWINGS

To complement the description provided and to assist in a better understanding of the features of the invention, this specification is accompanied, as an integral part thereof, by figures in which the following is illustrated by way of example and not limitation:

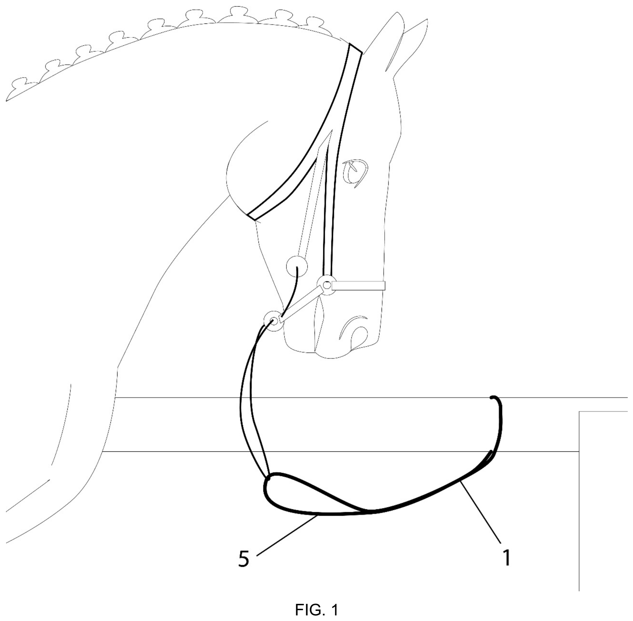

Figure 1 is a representation of the tethering lead for animals being used by a horse.

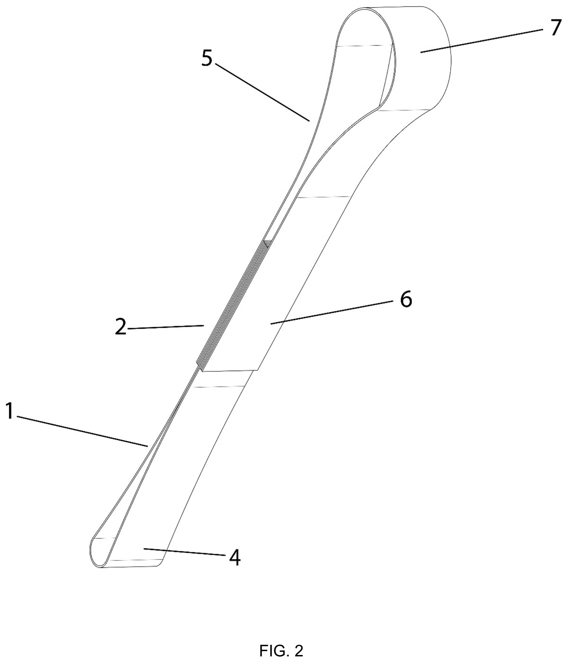

Figure 2 is a perspective view of the tethering lead for animals in an embodiment in which the ends (2) of the first body (1) are joined.

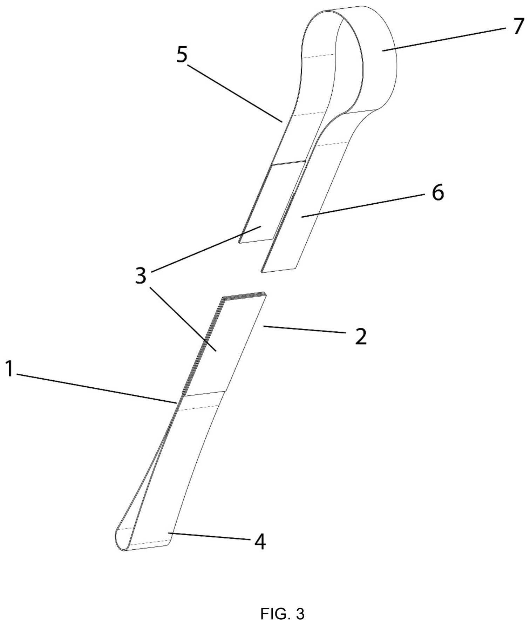

Figure 3 is a perspective view of the tethering lead for animals with the bodies (1) and (5) separated, in an embodiment in which the ends (2) of the first body (1) are joined.

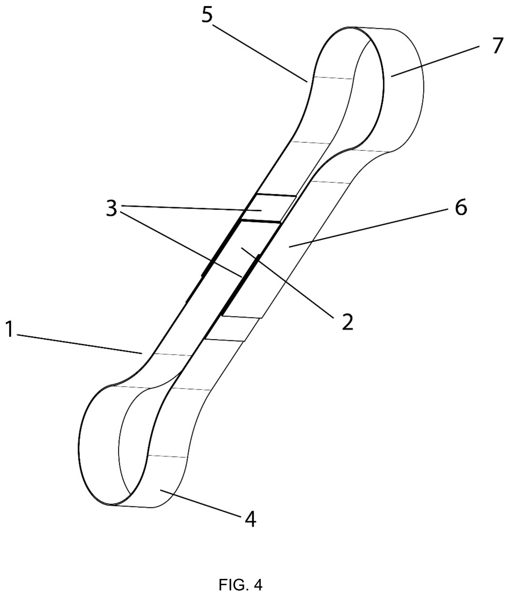

Figure 4 is a perspective view of the tethering lead for animals in an embodiment in which the ends (2) of the first body (1) are separated.

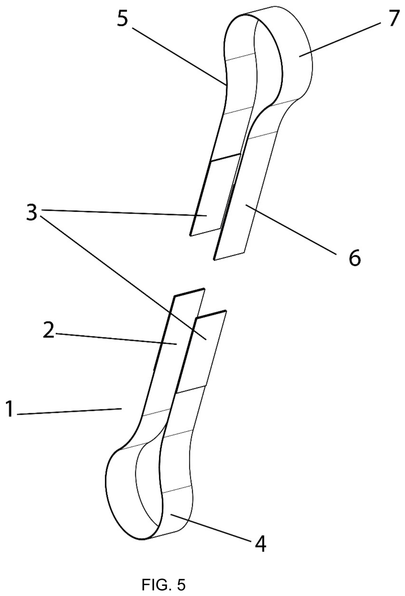

Figure 5 is a perspective view of the tethering lead for animals with the bodies (1) and (5) separated, in an embodiment in which the ends (2) of the first body (1) are separated.

### PREFERRED EMBODIMENT OF THE INVENTION

With reference to the figures, a preferred, though non-limiting, embodiment of the proposed invention is described, which consists of a tethering lead for animals.

As shown in the figures, the tethering lead for animals comprises a first body (1) configured as a strap, whose ends (2) are joined and include separable joining means (3), while the remainder of the body (1) forms a loop (4) configured as an eyelet, serving as a fixing element through which other components of harnesses or handles are attached.

Furthermore, the tethering lead for animals comprises a second body (5), configured as a strap, whose ends (6) include separable joining means (3) complementary to those located on the first body (1). When the second body (5) is attached to the first body (1), it forms a loop (7) through which other components of harnesses or handles are secured.

Depending on the embodiment, the ends (2) of the first body (1) may be separated, forming an open strap, which, when joined with the other body (5), forms a closed ring used to secure the other components of harnesses or handles.

The separable joining means (3) are of the hook-and-loop type.

Having adequately described the nature of the invention and how it may be implemented, no further explanation is considered necessary for a person skilled in the art to understand its scope and advantages. It should be noted that, in its essential form, the invention may be embodied in other implementations that differ in detail from the example provided, and such embodiments shall be covered by the protection sought, provided the fundamental principle of the invention remains unchanged.

## Claims

1. Tethering lead for animals, **characterised in that** it comprises: a first body (1) configured as a strap, whose ends (2) include separable joining means (3), while the remainder of the body (1) forms a loop (4) configured as an eyelet, serving as a fixing element through which the animal's lead ropes are attached; a second body (5), configured as a strap, whose ends (6) include separable joining means (3) complementary to those located on the first body (1) and whose body (5) forms a loop (7) through which it is attached to a post, fence, or handle.

2. Tethering lead for animals, according to the preceding claim, **characterised in that** the separable joining means (3) are of the hook-and-loop type.

3. Tethering lead for animals, according to any of the preceding claims, **characterised in that** the ends (2) of the first body (1) are joined together.

4. Tethering lead for animals, according to claims 1 and 2, **characterised in that** the ends (2) of the first body (1) are not joined together.
